# EUROPÄISCHE PATENTSCHRIFT

(11) **EP 0 728 973 B1**
(45) Veröffentlichungstag und Bekanntmachung des Hinweises auf die Patenterteilung: **08.10.1997**
(21) Anmeldenummer: 95118807.7
(22) Anmeldetag: 30.11.1995
(51) Int. Cl.: F16K 47/14, F16K 15/04

(54) **Hülseneinsatz mit Drosselbohrung für ein eine Flüssigkeit enthaltendes Gehäuse**
Bushing insert with a throttling bore for a fluid container
Douille d'insertion avec orifice d'étranglement pour un récipient d'un fluide

(30) Priorität: 16.12.1994 DE 4444773
(43) Veröffentlichungstag der Anmeldung: 28.08.1996
(73) Patentinhaber: Ford-Werke Aktiengesellschaft, 50735 Köln (DE); FORD MOTOR COMPANY LIMITED, Brentwood, Essex CM13 3BW (GB); FORD FRANCE S. A., 92506 Rueil-Malmaison (FR)
(72) Erfinder: Premiski, Vladimir, D-53909 Zuelpenich-Buervenich (DE); Silk, Mark, D-50767 Köln (DE)
(74) Vertreter: Messulam, Alec Moses

(56) Entgegenhaltungen:
- DE-A- 3 335 741
- DE-U- 1 736 402
- DE-U- 6 602 012
- DE-U- 7 342 500
- GB-A- 2 157 803

## Beschreibung

Die Erfindung bezieht sich auf einen Hülseneinsatz mit Drosselbohrung für ein eine Flüssigkeit enthaltendes Gehäuse, der im Oberbegriff des Patentanspruches 1 erläuterten Art.

Aus der DE-PS 16 07 867 ist ein Hülseneinsatz mit Drosselbohrung für ein eine Flüssigkeit enthaltendes Gehäuse, in diesem Fall ein Gefäß oder eine Flasche, bekannt, der in eine Durchtrittsöffnung zur Begrenzung des Flüssigkeitsdurchtritts selbstklemmend einsetzbar ist.

Hülseneinsätze mit Drosselbohrungen ähnlicher Bauart werden innerhalb von Getriebegehäusen angewendet, um Drosselbohrungen bestimmter geringer Größe nicht im verhältnismäßig dickwandigen Material des Getriebegehäuses einbringen zu müssen. (Siehe z.B. DE-OS 22 27 555, Fig. 1 B, Nähe Bezugsziffer 92.)

Solche Hülseneinsätze mit Drosselbohrungen werden innerhalb von Getriebegehäusen verwendet, um das im Umlauf befindliche Druckschmiermittel gezielt in bestimmte Bereiche des Getriebegehäuses zu lenken, wo ein besonderer Bedarf an Schmier- oder Kühlmittel vorhanden ist.

Diese bekannten Hülseneinsätze mit Drosselbohrung, die in herkömmlicher Weise als kleine, hülsen- oder hutförmige Blechpreßteile ausgebildet sind, in deren Boden die kleine Drosselbohrung eingebracht ist, weisen den Nachteil auf, daß sie dazu neigen, in ihrem Innern Schmutzpartikel anzusammeln, die zwangsläufig zur Drosselbohrung hin getrieben werden und diese eine Störung bewirkend zusetzen.

Aus der GB-OS 2 157 803 ist ein Hülseneinsatz mit einer Drosselbohrung für ein Flüssigkeit enthaltendes Gehäuse bekannt, der als ein Hülsenteil in eine Durchtrittsöffnung in einem Gehäuse einsetzbar ist und in seinem Boden eine Drosselbohrung aufweist, die an einer der Strömungsrichtung der Flüssigkeit entgegengesetzten Einstülpung angeordnet ist.

Bei diesem bekannten Hülseneinsatz sind mehrere Teile erforderlich, um das mit einer Drosselbohrung zusammenwirkende Überdruck-Kugelventil zu bilden.

Die Aufgabe der Erfindung ist es, einen Hülseneinsatz mit Drosselbohrung gemäß dem Oberbegriff des Patentanspruches 1 derart zu verbessern, daß eine Ansammlung von Schmutzpartikeln innerhalb des Hülseneinsatzes kaum mehr zu einer Störung des Flüssigkeitsdurchtritts durch die Drosselbohrung führt, wobei der Hülseneinsatz eine Drucksteuerfunktion erfüllen soll.

Die Erfindung greift hierzu einen Hinweis aus der DE-OS 20 63 890 zur Abscheidung von Feststoffen aus Flüssigkeiten auf.

Gemäß der Erfindung wird diese Aufgabe gelöst, indem ein Hülseneinsatz mit Drosselbohrung für ein eine Flüssigkeit enthaltendes Gehäuse, der im Oberbegriff des Patentanspruches 1 erläuterten Art, die im Kennzeichenteil des Patentanspruches 1 aufgezeigten Merkmale aufweist.

Dadurch, daß der Boden des Hülseneinsatzes zu einem der Strömungsrichtung der Flüssigkeit entgegengerichteten Kegel ausgeformt ist, in dessen Spitze die Drosselbohrung angeordnet ist, werden Schmutzpartikel, die in die Nähe der Drosselbohrung gelangen, nach seitlich außen abgeleitet, wo sie sich in dem beruhigten Bereich am Fuße des Kegels ansammeln können. Auf diese Weise wird ein frühzeitiges Zusetzen der Drosselbohrung geringer Größe zuverlässig vermieden.

Im Patentanspruch 2 ist eine weitere Ausführungsform der Erfindung erläutert, die zusätzlich zur Schmutzansammlungsfunktion noch eine weitere Drucksteuerfunktion bereitstellt.

Die Erfindung wird anhand dreier in den beigefügten Zeichnungen gezeigter Ausführungsbeispiele näher erläutert. Es zeigt:
- Fig. 1: einen vertikalen Teilschnitt durch den Bereich von Lamellenkupplungen eines automatischen Kraftfahrzeuggetriebes, in dem der erfindungsgemäße Hülseneinsatz mit Drosselbohrung zur Verteilung des Druckschmiermittels angewendet werden kann;
- Fig. 2: einen Schnitt durch einen herkömmlichen Hülseneinsatz mit Drosselbohrung;
- Fig. 3: einen Schnitt durch einen Hülseneinsatz mit Drosselbohrung und
- Fig. 4: einen Schnitt durch einen erfindungsgemäßen Hülseneinsatz mit Drosselbohrung und Drucksteuerfunktion;
- Fig. 5: einen Schnitt durch einen erfindungsgemäßen Hülseneinsatz mit einer besonderen Drucksteuerfunktion.

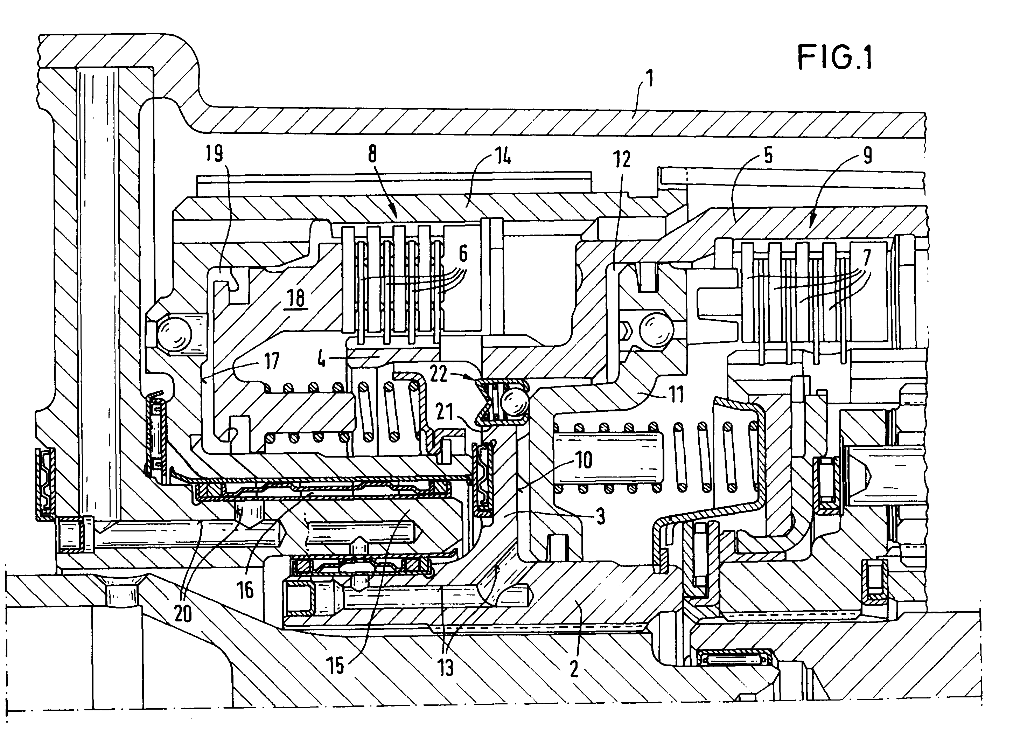

In Fig. 1 sind in einem Getriebegehäuse 1 Bauteile eines automatischen Kraftfahrzeuggetriebes gezeigt, die nur insoweit beschrieben werden, wie sie für das Verständnis der Erfindung erforderlich sind. Ein als Kupplungsträger bezeichnetes Bauteil 2 weist eine radiale Mittelwand 3 und trommelförmige Zylinderteile 4 und 5 auf, die die inneren Aufnahmen für innere Lamellenscheiben 6 bzw. die äußeren Aufnahmen für äußere Lamellenscheiben 7 von zwei Lamellenkupplungen 8 und 9 bilden.

Der Kupplungsträger 2 bildet einen Zylinder 10 für einen Betätigungskolben 11 für die Lamellenkupplung 9.

Der vom Zylinder 10 und dem Kolben 11 gebildete Betätigungs-Druckraum 12 wird über im Kupplungsträger 2 angeordnete Versorgungskanäle 13 mit Druckflüssigkeit beaufschlagt, um die Lamellenkupplung 9 einzurücken. Bei der Lamellenkupplung 9 handelt es sich hierbei um eine sogenannte Vorwärtsgangkupplung, die zum Einlegen der Vorwärtsgänge eingerückt wird, dann jedoch während des normalen Fahrbetriebes nicht mehr geschaltet wird.

An der vorderen Seite des Kupplungsträgers 2 ist die Lamellenkupplung 8 angeordnet, die einen Trommelbauteil 14 aufweist, der an seinem Innenumfang auf einen sogenannten Mittelträger 15 über eine Nadellageranordung 16 drehbar gelagert abgestützt ist.

Das Trommelbauteil 14 bildet einen Zylinder 17, in dem ein Kolben 18 zum Betätigen der Lamellenkupplung 8 aufgenommen wird. Der vom Zylinder 17 und dem Kolben 18 gebildete Druckmittel-Betätigungsraum 19 wird über Kanäle 20 mit Druckmittel beaufschlagt.

Bei der Lamellenkupplung 8 handelt es sich um eine Kupplung, die während der unterschiedlichen Schaltungen im Fahrbetrieb des Kraftfahrzeuges öfter betätigt wird und dementsprechend durch häufige Anlege- und Ablege-Sequenzen wärmemäßig stark belastet wird. Aus diesem Grund muß den Lamellenscheiben 6 ausreichend Druckschmiermittel zur Kühlung zugeführt werden. Um nun sicherzustellen, daß im Bereich radial innerhalb der Lamellenscheiben 6 ausreichend und gezielt Druckmittel zur Verfügung steht, wird in der Mittelwand 3 des Kupplungsträträgers 2 eine Durchtrittsbohrung 21 angeordnet, in der ein erfindungsgemäßer Hülseneinsatz 22 eingesetzt wird, der Druckmittel vom Druckmittel-Betätigungsraum 12 abzweigt.

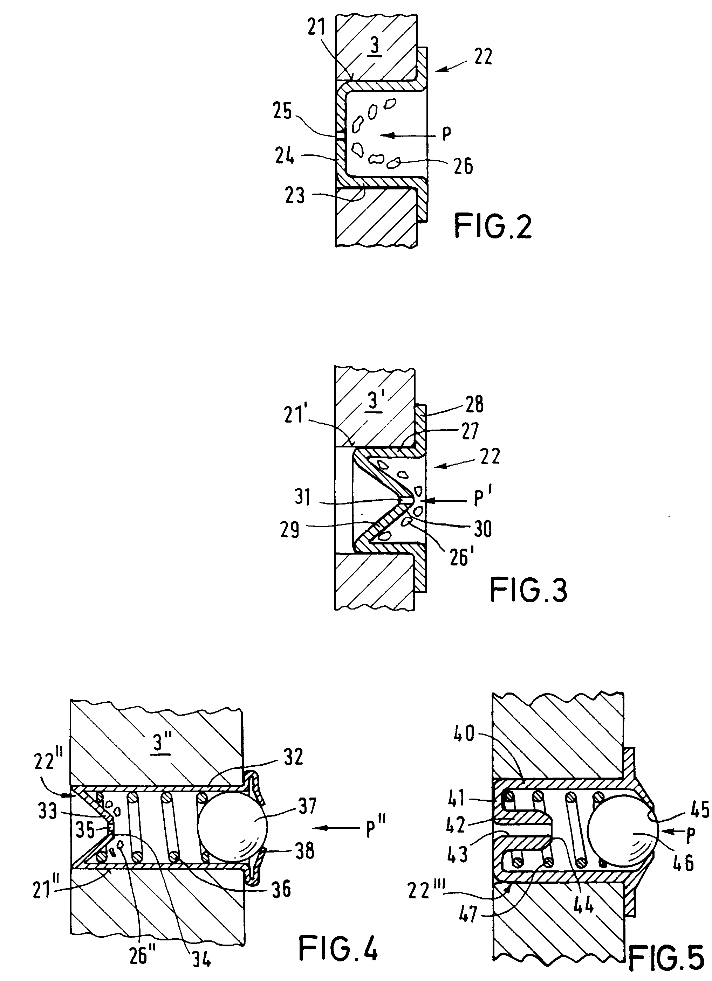

Die genaue Form des erfindungsgemäßen Hülseneinsatzes wird im Zusammenhang mit den Figuren 2, 3, 4 und 5 näher erläutert.

Aus Fig. 2 ist die herkömmliche Form eines bekannten Hülseneinsatzes 22 mit Drosselbohrung zu ersehen, der bisher als einfaches Blechpreßteil 23 in Hutform mit in seinem Boden 24 eingebrachter Drosselbohrung 25 ausgebildet war. Die Strömungsrichtung wird hierbei durch den Pfeil P angegeben und die sich ansammelnden Schmutzpartikel sind mit 26 bezeichnet.

Der in Fig. 3 gezeigte Hülseneinsatz 22' mit Drosselbohrung ist wieder als einfaches Blechpreßteil 27 in Hutform ausgebildet, dessen Boden als Kegel 29 ausgeformt ist, in dessen Spitze 30 die Drosselbohrung 31 angeordnet ist. Die Strömungsrichtung des Druckmittels ist wieder durch den Pfeil P' angegeben und die sich ansammelnden Schmutzpartikel sind mit 26' bezeichnet.

Es ist einfach einzusehen, daß durch die Anordnung der Drosselbohrung 31 in der Spitze 30 des Kegels 29 ein Selbstreinigungseffekt für die enge Drosselbohrung erreicht wird, der sicherstellt, daß die Funktion der Drosselbohrung über die gesamte Lebensdauer des Getriebes erhalten bleibt.

Grundsätzlich kann an der in Fig. 1 in der Mittelwand 3 des Kupplungsträgers 2 gezeigten Durchtrittsbohrung 21 ein Hülseneinsatz 22' mit Drosselbohrung gemäß der Fig. 3 angeordnet werden. Das würde jedoch bei der Beaufschlagung der Vorwärtsgangkupplung 9 zu einer Verzögerung ihres Anlegeverhaltens führen, was nicht erwünscht ist.

Um diesen Nachteil zu vermeiden, wird der erfindungsgemäße Hülseneinsatz 22'' mit Drosselbohrung gemäß der Ausführungsform in Fig. 4 angewendet, die bereits in Fig. 1 mit den Bezugszeichen 22 gekennzeichnet ist.

Der Hülseneinsatz 22'' mit Drosselbohrung besteht wieder aus einem Hülsenteil 32, dessen Boden als Kegel 33 mit in dessen Spitze 34 angeordneter Drosselbohrung 35 ausgebildet ist.

Im Hülsenteil 32 ist darüber hinaus eine Schraubendruckfeder 36 und eine Kugel 37 angeordnet, die mit einem durch eine Umbördelung gebildeten Ventilsitz 38 zusammenwirkt.

Der Hülseneinsatz 22'' mit Drosselbohrung kann somit dazu verwendet werden, Druckmittel von der durch den Pfeil P'' angegebenen Druckseite erst dann abzuführen, wenn dieser Druck einen bestimmten Wert übersteigt.

Sobald ein bestimmter Druckwert überstiegen wird, wird die Kraft der Feder 36, die auf die Kugel 37 einwirkt, überschritten und eine Druckmittelströmung durch den Hülsenteil 22'' ermöglicht. An der Drosselbohrung 35 werden Schmutzpartikel wieder, wie bereits im Zusammenhang mit Fig. 3 geschildert, zum äußeren Rand hin abgewiesen.

Der in Fig. 4 gezeigte Hülseneinsatz 22'' kann jedoch in einem speziellen Betriebszustand der Vorwärtsgangkupplung, dem sogenannten "Stall-Betriebszustand" zu Schwierigkeiten führen, indem der dann erforderliche höchste Betätigungsdruck der Vorwärtsgangkupplung durch den Druckmittelabfluß beeinträchtigt wird.

Um solche Schwierigkeiten zu vermeiden, wird der in Fig. 5 gezeigte Hülseneinsatz 22''' verwendet. Der Hülseneinsatz 22''' weist wieder einen Hülsenteil 40 in Hutform auf, dessen Boden 41 eine z.B. kegelförmige Einstülpung 42 aufweist, in der die Drosselbohrung 43 angeordnet ist und an der ein zweiter Ventilsitz 44 ausgebildet ist.

Das andere Ende des Hülseneinsaztes 22''' weist den ersten Ventilsitz 45 für die im Hülseneinsatz 22''' angeordnete Kugel 46 auf, die von einer Schraubendruckfeder 47 belastet wird.

Durch den zweiten Ventilsitz 44 an der Einstülpung 42 wird der ähnlich der Ausführungsform in Fig. 4 oberhalb eines bestimmten Druckmitteldruckes durch die vom ersten Ventilsitz abhebende Kugel freigegebene Druckmittel-Durchfluß durch die Drosselbohrung 43 bei Auftreten des Höchstdruckes im Stall-Betriebszustand" unterbunden, indem die Kugel am zweiten Ventilsitz anglegt, so daß keine Beeinträchtigung der Kapazität der Vorwärtsgangkupplung auftritt.

Der Vollständigkeit halber wird darauf hingewiesen, daß selbstverständlich andere Ausführungsformen eines erfindungsgemäßen Hülseneinsatzes mit Drosselbohrung möglich sind, insbesondere können solche Einsätze als Drehteile aus Aluminium oder Messing und dergleichen oder als Spritzgußteile aus Kunststoff hergestellt werden.

## Patentansprüche

1. Hülseneinsatz mit Drosselbohrung für ein Flüssigkeit enthaltendes Gehäuse, der als ein Hülsenteil (22) in eine Durchtrittsöffnung (21) in einem Gehäuse (3) einsetzbar ist und in seinem Boden (24) eine Drosselbohrung (25) aufweist,
- die am Boden des Hülseneinsatzes (22') an einem der Strömungsrichtung (P') der Flüssigkeit entgegengerichteten Vorsprung (29) angeordnet ist,
**dadurch gekennzeichnet**, daß
- der Hülseneinsatz (22'') eine über eine Feder (36) belastete Kugel (37) aufnimmt und an seinem dem Vorsprung (34) gegenüberliegenden Ende mit einem durch eine Umbördelung gebildeten ersten Ventilsitz (38) versehen ist und ein Überdruck-Kugelventil bildet.

2. Hülseneinsatz nach Anspruch 1,
**dadurch gekennzeichnet**, daß
- der Boden (41) des Hülseneinsatzes (22''') eine Einstülpung (42) aufweist, in der die Drosselbohrung (43) angeordnet ist und an der ein weiterer Ventilsitz (44) für die Kugel (46) des durch die Feder (47) belasteten Überdruckventiles ausgebildet ist und so ein Bereichsdruck-Kugelventil bildet.

## Claims

1. A bush insert with an orifice for a liquid-containing housing which is insertable as a bush (22) in a passage opening (21) in a housing (3) and has an orifice (25) in its base, which is located on a projection (29) at the base of the bush insert (22') pointing counter to the direction of flow (P') of the liquid
characterised in that
- the bush insert (22'') receives a ball (37) loaded by a spring (36) and is provided at the opposite end to the projection (34) with a first valve seat (38) formed by a bead or flange and constitutes an excess pressure ball valve.

2. A bush insert according to claim 1,
characterised in that
- the base (41) of the bush insert (22''') is provided with an internal cuff (42) in which the orifice (43) is located and on which a further valve seat (44) for the ball (46) of the excess pressure valve loaded by the spring (47) is formed, thus forming a pressure-range ball valve.

## Revendications

1. Insert en forme de douille présentant un orifice d'étranglement et destiné à une enveloppe contenant un liquide, qui peut être mis en place comme une pièce (22) en forme de douille dans une ouverture de passage (21) pratiquée dans une enveloppe (3) et dont le fond (24) présente un orifice d'étranglement (25), l'orifice étant disposé notamment sur une protubérance (29) prévue sur le fond de l'insert (22') en forme de douille et orientée en sens contraire à la direction d'écoulement (P') du liquide,
caractérisé en ce que l'insert (22'') en forme de douille contient une bille (37) chargée par un ressort (36), est pourvu d'un premier siège de soupape (38) formé par une sertissure à son extrémité située à l'opposé de la protubérance (34), et constitue une soupape à bille de surpression.

2. Insert en forme de douille selon la revendication 1, caractérisé en ce que le fond (41) de l'insert (22''') présente une partie retournée (42), dans laquelle est disposé l'orifice d'étranglement (43) et sur laquelle est formé un siège de soupape supplémentaire (44) pour la bille (46) - chargée par le ressort (47) - de la soupape de surpression, de sorte que l'insert constitue une soupape à bille à plage de pression.
